# FASCICULE DE BREVET EUROPEEN

(11) **EP 0 301 938 B1**
(45) Date de publication et mention de la délivrance du brevet: **19.05.1993**
(21) Numéro de dépôt: 88401834.2
(22) Date de dépôt: 13.07.1988
(51) Int. Cl.: A47C 7/46

(54) **Dispositif de réglage de tension de nappe élastique**
Verstellvorrichtung der Spannung eines elastischen Überzuges
Device for adjusting the tension of an elastic cover

(30) Priorité: 31.07.1987 FR 8710947
(43) Date de publication de la demande: 01.02.1989
(73) Titulaire: CESA COMPAGNIE EUROPEENNE DE SIEGES POUR AUTOMOBILES, 92300 Levallois-Perret (FR)
(72) Inventeur: Deley, Serge, F-25230 Seloncourt (FR); Fourrey, François, F-25200 Montbelliard (FR)
(74) Mandataire: Mestre, Jean (FR)

(56) Documents cités:
- EP-A- 0 158 562
- GB-A- 1 536 132
- US-A- 4 556 251

## Description

La présente invention concerne le réglage de la tension d'une nappe élastique, notamment d'une nappe intégrée dans un dossier de siège de véhicule.

On connait divers dispositifs de réglage de la tension lombaire du dossier d'un siège de véhicule automobile. La plupart d'entre eux sont constitués d'une bande de toile résistante qui est placée entre les montants du dossier, derrière la nappe élastique au niveau de la région lombaire, et dont on règle la tension à l'aide d'un bouton ou d'un levier de tirage placé sur l'un des montants du dossier. Le fait de tendre plus ou moins fortement la nappe annule localement la possibilité pour la nappe élastique de s'enfoncer sous l'effort exercé par le dos de l'occupant.

Généralement, le bouton ou le levier de commande de tension est mal aisé à manoeuvrer du fait de sa position en arrière de l'occupant, et sa présence complique l'adaptation des garnissages de dossier ainsi que la mise en place ultérieure éventuelle de housses de sièges par l'utilisateur, mais surtout ces dispositifs à bande de tension procurent, en fait, une sensation d'inconfort, l'occupant du siège ayant l'impression qu'une barre rigide transversale est placée dans son dossier, au niveau lombaire.

Un état de la technique est illustré par le document EP-A-158 562.

L'invention a pour but de créer un dispositif de réglage de tension lombaire de dossier facilitant la manoeuvre de réglage et améliorant considérablement la sensation de confort par élimination de "l'effet de barre".

L'invention a donc pour objet un dispositif de réglage de la tension d'une nappe élastique fixé à un cadre, notamment d'une nappe pour dossier de siège de véhicule, du type indiqué dans le document cité dont les éléments nécessaires à l'invention sont énoncés dans le préambule de la revendication principale. Les particularités distinctives de l'invention ressortent notamment de la partie caractérisante de cette revendication.

Suivant d'autres caractéristiques :
- chaque organe comprend un bras supérieur et un bras inférieur reliés par une partie centrale qui est perpendiculaire aux deux bras;
- l'axe de pivotement de chaque organe de manoeuvre fait avec le plan médian longitudinal de la nappe un angle aigu vers l'avant tel qu'il autorise à la fois un écartement et un déplacement vers l'avant des bras supérieurs des organes de manoeuvre lorsque les bras inférieurs se déplacent l'un vers l'autre et vers l'arrière.
- la partie centrale de chaque organe de manoeuvre est montée pivotante dans un gousset situé dans un plan transversal sensiblement perpendiculaire au plan général de la nappe;

D'autres modes de réalisation selon l'invention sont indiqués dans les revendications 5 à 10.

L'invention sera mieux comprise à l'aide de la description qui va suivre, donnée uniquement à titre d'exemple et faite en se référant aux dessins annexés, sur lesquels :
- la Fig.1 représente une vue schématique en perspective du dispositif selon l'invention, monté sur un dossier de siège et en position de repos;
- la Fig.2 représente une vue schématique en perspective du dispositif en position tendue.

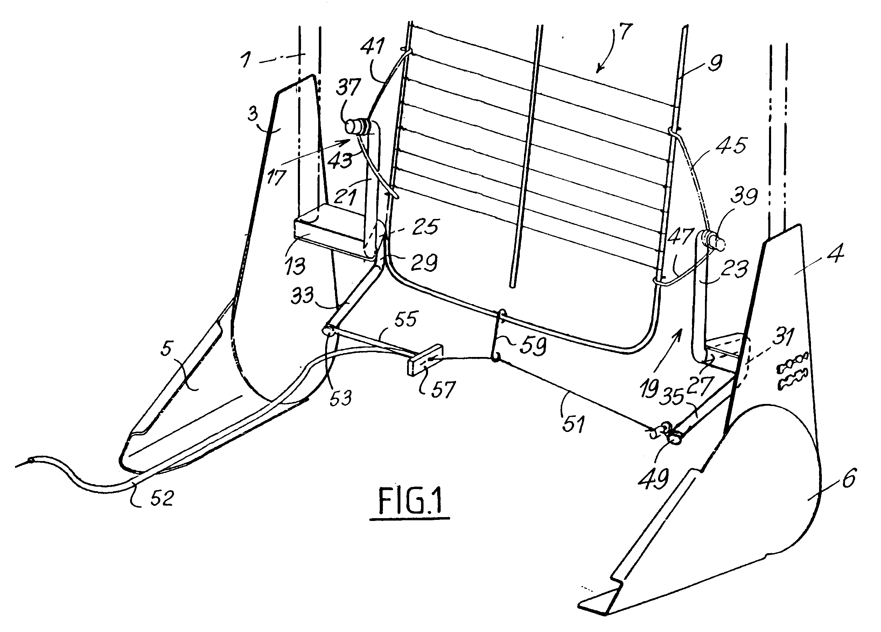

On a représenté sur la Fig.1, une vue schématique d'une structure de dossier de siège ainsi que de son articulation avec une structure d'assise du siège. Sur chacune des parties latérales de l'armature 1 du dossier de siège, sont fixés respectivement des flasques 3,4 constituant une partie de l'articulation entre le dossier et l'assise. Les flasques 3,4 sont d'autre part articulés sur des flasques 5,6 respectivement, situés de part et d'autre de l'assise du siège. Le dossier comporte, dans le mode de réalisation représenté, une nappe élastique, de référence générale 7 constituée par un ensemble de ressorts fixés à un cadre 9 élastiquement déformable qui peut être constitué par des brins élastiques.

Deux goussets 13, 15 sont respectivement fixés aux flasques 3 et 4 par sertissage et s'étendent chacun dans un plan transversal sensiblement perpendiculaire au plan général de la nappe. Les goussets 13, 15 servent d'éléments de tourillonnement pour deux organes de manoeuvre 17,19, placés respectivement de chaque côté de la nappe élastique 7. Chaque organe de manoeuvre comporte un bras supérieur respectivement 21, 23, une partie centrale respectivement 25,27 et un bras inférieur respectivement 29, 31, chaque bras inférieur étant terminé par une partie repliée respectivement 33, 35 orientée vers l'avant.

La partie centrale 25,27 de chaque organe de manoeuvre 17,19 est située à l'intérieur du gousset 13,15 correspondant, du côté opposé à la fixation de ce gousset sur le flasque d'articulation 3, 4, et fait avec le bras supérieure et avec le bras inférieur de cet organe des angles en sens inverse mais sensiblement égaux, qui dans le mode de réalisation représenté, sont des angles droits. L'axe de cette partie centrale sert d'axe fixe de pivotement pour l'organe de manoeuvre considéré et fait avec le plan médian longitudinal de la nappe un angle aigu dirigé vers l'avant et, dans le mode de réalisation représenté, avec le flasque 3, 4, un angle aigu dirigé vers l'arrière du dossier. Chacun des organes de manoeuvre 17,19 pivote dans un plan transversal incliné par rapport au plan de la nappe qui s'éloigne de celui-ci vers l'avant du siège.

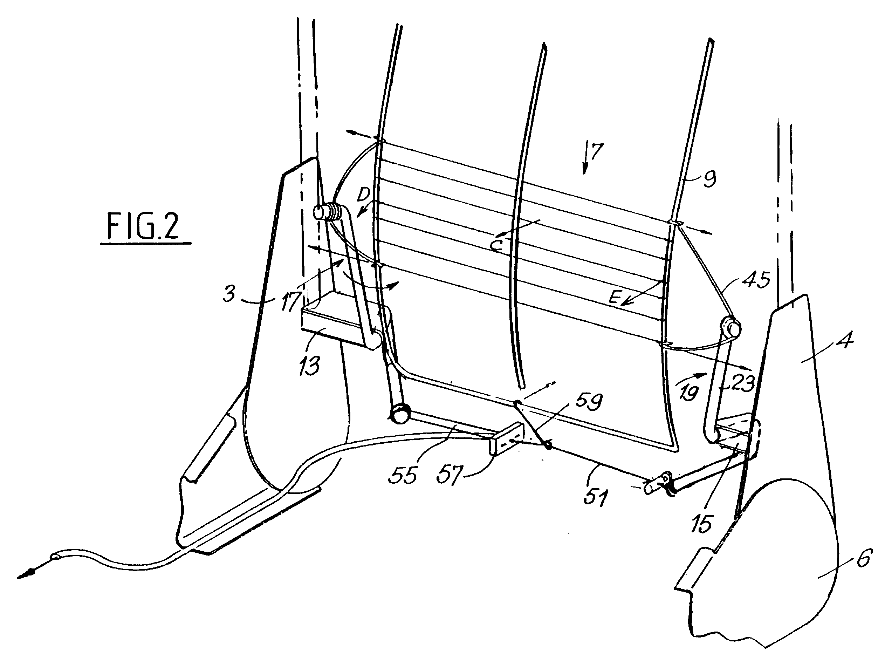

Les extrémités supérieurs 37,39 des deux organes de manoeuvre sont constituées par des doigts perpendiculaires aux bras supérieurs des organes et faisant saillie vers l'avant du siège pour se trouver pratiquement dans le même plan que les extrémités des parties repliées. Elles sont respectivement reliées en deux ponts espacés à l'un des montants latéraux du cadre 9 de la nappe élastique 7 par l'intermédiaire de ressorts de tirage 41,43,45,47. Les longueurs des ressorts supérieurs 41,45 d'une part, et inférieurs 43,47 d'autre part, sont différentes de manière à assurer une déformation inégale de la nappe élastique. Selon que l'on souhaite déformer une partie basse ou une partie haute de la nappe, on placera les ressorts de plus grande longueur 41,45 comme représenté Fig.1 ou dans la position inverse. Dans le mode de réalisation représenté, on a une déformation plus accentuée de la partie basse (Fig.2), les ressorts inférieurs étant plus courts. La distance séparant les points d'accrochage des ressorts sur les montants détermine la hauteur de la zone de la nappe que l'on souhaite déformer. Dans le cas d'un dossier de siège, cette zone de déformation est généralement située au niveau de la région lombaire.

A l'extrémité 49 de la partie repliée 35 du bras inférieur 31 est fixé un câble de tirage 51 coulissant dans une gaine 52. A l'autre extrémité du câble 51 est placé un moyen de tirage (non représenté), tel que par exemple un winch muni d'un frein dont un opère la rotation à l'aide d'un bouton de manoeuvre. L'ensemble de winch est fixé, par exemple, sur l'une des barres latérales de la structure d'assise du siège à l'endroit le plus ergonomiquement approprié. Bien entendu, le winch pourra être remplacé par tout autre moyen de tirage du câble, tel qu'un levier de commande à cran ou un motoréducteur électrique à arbre d'enroulement lent.

L'extrémité 53 de la partie repliée 33 du bras inférieur 29, est relié rigidement par l'intermédiaire d'un étrier en fil 55 à un taquet d'arrêt de gaine 57 dans lequel vient s'appuyer la gaine 52 du câble de tirage 51 et que traverse librement ce câble. En outre, un crochet 59 est placé entre le câble 51 et le montant inférieure du cadre 9 de la nappe élastique 7. De manière recommandée, le crochet 59 est fixé au milieu du montant du cadre de la nappe élastique et est monté sur le câble de manière à permettre à ce dernier de coulisser dans la boucle d'accrochage.

Le fonctionnement du dispositif est le suivant.

Lorsqu'on actionne le winch de manoeuvre, le câble 51 est tiré et coulisse dans la gaine 52 et à travers le taquet 57 en rapprochant les bras inférieurs 29, 31 l'un de l'autre dans un déplacement vers l'arrière, ce qui provoque le pivotement de la partie centrale 25, 27 de chacun des organes de manoeuvre 17, 19. La configuration des organes de manoeuvre 17,19 et l'angle formé entre leur axe de pivotement et le plan longitudinal de la nappe, fait que ce déplacement vers l'arrière et ce rapprochement des bras inférieurs produit l'effet inverse sur les bras supérieurs, les bras supérieurs tendant alors à s'écarter en basculant vers l'avant. L'amplitude du mouvement vers l'avant des bras supérieurs est déterminée par la longueur de ces bras d'une part, et par la valeur des angles formés par les axes de pivotement par rapport au plan de la nappe d'autre part.

Le déplacement des bras tire les ressorts 41, 43 et 45, 47 à la fois latéralement et verticalement, ce qui provoque un déplacement, repéré C,D,E sur la Fig.2, de la région de la nappe de dossier, vers l'avant tout en la raidissant.

D'autre part, lorsqu'on tire le cable 51, ce dernier se déplace également vers l'arrière de sorte que le crochet 59 tend à tirer le bas de la nappe élastique dans le même sens et renforce ainsi l'effet de déformation de la nappe dans le bas, c'est à dire dans la région lombaire.

Lorsque le câble 51 est complétement tiré, la région lombaire de la nappe s'avance en se tendant tandis que la région inférieure se trouvant en-dessous de la région lombaire se creuse.

Lorsque le câble de tirage est relâché, la nappe revient à sa position normale détendue sous l'effet de son élasticité propre.

On remarquera que les extrémités des parties coudées 33, 35 des bras inférieurs sont judicieusement choisies pour se trouver sensiblement proches de l'axe de pivotement des articulations des flasques 5 et 3, 6 et 4 respectivement, permettant ainsi de ne modifier en rien le réglage de tension initialement choisi lorsque l'on change l'inclinaison du dossier.

Si l'invention vise particulièrement les sièges de véhicule automobile, il va de soi qu'elle n'est pas limitée à cette application particulière et qu'il est possible de conformer le dispositif de telle manière qu'il puisse s'adapter à d'autres types de sièges.

## Revendications

1. Dispositif de réglage de la tension d'une nappe élastique (7) fixée à un cadre (9), notamment d'une nappe pour dossier de siège de véhicule avec deux organes de manoeuvre (17, 19) qui sont placés respectivement de chaque coté de la nappe élastique (7) et qui pivotent autour d'axes fixes, caractérisé en ce que chacun de ces deux organes (17, 19) présente une partie centrale (25, 27) dont l'axe sert d'axe fixe, en ce que ces axes font un angle aigu avec le plan longitudinal de la nappe (7) et en ce que chacun de ces deux organes (17, 19) pivote dans un plan transversal qui est incliné par rapport à ce plan de la nappe (7) et qui s'éloigne de celui-ci vers l'avant du siège, l'extrémité supérieure (37, 39) de chaque organe (17, 19) étant reliée en deux points espaces aux montants latéraux du cadre (9) de la nappe élastique (7) et des moyens de commande (51, 52) étant fixés aux extrémités inférieures desdits organes (17, 19).

2. Dispositif selon la revendication 1, caractérisé en ce que chaque organe comprend un bras supérieur (21, 23) et un bras inférieur (29, 31) reliés par la partie centrale (25, 27) qui est perpendiculaire aux deux bras.

3. Dispositif selon l'une quelconque des revendications 1 à 3, caractérisé en ce que l'axe de pivotement de chaque organe de manoeuvre fait avec le plan médian longitudinal de la nappe un angle aigu vers l'avant tel qu'il autorise à la fois un écartement et un déplacement vers l'avant des bras supérieurs des organes de manoeuvre lorsque les bras inférieurs se déplacent l'un vers l'autre et vers l'arrière.

4. Dispositif selon les revendications 1 et 3, caractérisé en ce que la partie centrale (25,27) de chaque organe de manoeuvre (17,19) est montée pivotante dans un gousset (13,15) situé dans un plan transversal sensiblement perpendiculaire au plan général de la nappe.

5. Dispositif selon les revendications 1 à 4, caractérisé en ce que l'extrémité supérieure (37, 39) de chaque organe de manoeuvre (17,19) est reliée en deux points espacés à la nappe élastique par des ressorts (41,43; 45,47) de longueurs différentes qui sont montés pivotants sur ladite extrémité.

6. Dispositif selon l'une des revendications 1 à 5, caractérisé en ce que les moyens de commande comportent un câble (51) fixé à l'extrémité (49) du bras inférieur (31) de l'un (19) des organes de manoeuvre et traversant un taquet (57) relié rigidement à l'extrémité (53) du bras inférieur (29) de l'autre (17) organe de manoeuvre et des moyens de tirage du câble.

7. Dispositif selon la revendication 6, caractérisé en ce qu'il comprend en outre un crochet (59) fixé d'une part sur le câble (51) et d'autre part sur le brin inférieur du cadre (9) de la nappe élastique (7).

8. Dispositif selon l'une des revendications 6 et 7, caractérisé en ce que le taquet (57) est relié au bras inférieur (29) par l'intermédiaire d'un étrier (55).

9. Dispositif selon l'une des revendications 6 à 8, caractérisé en ce que les moyens de tirage du câble sont fixés à l'armature d'assise du siège.

10. Dispositif selon l'une des revendications 6 à 9, caractérisé en ce que les moyens de tirage du câble sont constitués par un winch.

## Claims

1. Device for adjusting the tension in an elastic sheet (7) fixed to a frame (9), notably a sheet for a vehicle seat back rest with two manoeuvring members (17, 19) which are positioned respectively on each side of the elastic sheet (7) and which pivot about fixed axes, characterised in that each of these two members (17, 19) has a middle part (25, 27), the axis of which serves as a fixed axis, in that these axes make an acute angle to the longitudinal plane of the sheet (7) and in that each of these two members (17, 19) pivots in a transverse plane which is inclined with respect to this plane of the sheet (7) and which moves away from the latter towards the front of the seat, the top end (37, 39) of each member (17, 19) being connected, at two points separated from each other, to the lateral uprights of the frame (9) of the elastic sheet (7), and control means (51, 52) being fixed to the bottom ends of the said members (17, 19).

2. Device according to Claim 1, characterised in that each member comprises an upper arm (21, 23) and a lower arm (29, 31) connected by a middle part (25, 27) perpendicular to the two arms.

3. Device according to any one of Claims 1 to 3, characterised in that the pivot axis of each manoeuvring member forms, with the longitudinal mid-plane of the sheet, an acute angle towards the front such that it allows the upper arms of the manoeuvring members both to separate and to move towards the front when the lower arms move towards each other and towards the rear.

4. Device according to Claims 1 and 3, characterised in that the middle part (25, 27) of each manoeuvring member (17, 19) is mounted so as to pivot in a bracket (13, 15) situated in a transverse plane substantially perpendicular to the overall plane of the sheet.

5. Device according to Claims 1 to 4, characterised in that the top end (37, 39) of each manoeuvring member (17, 19) is connected to the elastic sheet, at two points spaced apart, by springs (41, 43; 45, 47) of different lengths, which are mounted so as to pivot on the said end.

6. Device according to one of Claims 1 to 5, characterised in that the control means include a cable (51) fixed to the end (49) of the lower arm (31) of one (19) of the manoeuvring members and passing through a lug (57) connected rigidly to the end (53) of the lower arm (29) on the other (17) manoeuvring member and means for pulling on the cable.

7. Device according to Claim 6, characterised in that it also comprises a hook (59) fixed firstly to the cable (51) and secondly to the bottom rib of the frame (9) of the elastic sheet (7).

8. Device according to one of Claims 6 and 7, characterised in that the lug (57) is connected to the lower arm (29) by means of a brace (55).

9. Device according to one of Claims 6 to 8, characterised in that the means for pulling on the cable are fixed to the frame of the seat squab.

10. Device according to one of Claims 6 to 9, characterised in that the means for pulling on the cable consist of a winch.

## Patentansprüche

1. Vorrichtung zur Regelung der Spannung einer an einem Rahmen (9) befestigten elastischen Matte (7), insbesondere einer Matte für die Rückenlehne eines Fahrzeugsitzes, mit zwei Verstellgliedern (17, 19), die jeweils an beiden Seiten der elastischen Matte (7) angebracht sind und um feste Achsen schwenkbar sind, dadurch gekennzeichnet, daß
jedes der beiden Glieder (17, 19) einen zentralen Bereich (25, 27) aufweist, dessen Achse als feste Achse dient, daß diese Achsen im spitzen Winkel zur Längsebene der Matte (7) stehen und daß jedes der beiden Glieder (17, 19) in einer Querebene, die gegen diese Ebene der Matte (7) geneigt ist und sich von dieser in Richtung der Vorderseite des Sitzes erstreckt, schwenkbar ist, wobei das obere Ende (37, 39) eines jeden Stellgliedes (17, 19) an zwei voneinander getrennten Punkten mit den seitlichen Spangen des Rahmens (9) der elastischen Matte (7) verbunden ist und Stellvorrichtungen (51, 52) an den unteren Enden der Stellglieder (17, 19) befestigt sind.

2. Vorrichtung nach Anspruch 1, dadurch gekennzeichnet, daß jedes Stellglied einen oberen Arm (21, 23) und einen unteren Arm (29, 31) umfaßt, die durch den zentralen Bereich (25, 27), der auf beiden Armen senkrecht steht, verbunden sind.

3. Vorrichtung nach einem der Ansprüche 1 und 2, dadurch gekennzeichnet, daß die Schwenkachse eines jeden Stellglieds zu der Längsmedianebene der Matte im spitzen Winkel nach vorne steht und so gleichzeitig eine Auseinanderbewegung und eine Vorwärtsbewegung der oberen Arme der Stellglieder ermöglicht, wenn die unteren Arme sich aufeinander zu und nach hinten bewegen.

4. Vorrichtung nach den Ansprüchen 1 und 3, dadurch gekennzeichnet, daß der zentrale Bereich (25, 27) eines jeden Stellglieds (17, 19) schwenkbar in einem Eckstück (13, 15) montiert ist, das in einer zur Ebene der Matte in etwa senkrechtstehenden Querebene liegt.

5. Vorrichtung nach den Ansprüchen 1 bis 4, dadurch gekennzeichnet, daß das obere Ende (37, 39) eines jeden Stellgliedes (17, 19) an zwei voneinander getrennten Punkten mit der elastischen Matte über schwenkbar an diesem Ende angebrachte Federn (41, 43; 45, 47) von unterschiedlicher Länge verbunden ist.

6. Vorrichtung nach einem der Ansprüche 1 bis 5, dadurch gekennzeichnet, daß die Stellvorrichtungen ein am Ende (49) des unteren Armes (31) von einem der Stellglieder (19) befestigtes und einen starr mit dem Ende (53) des unteren Armes (29) des anderen Stellgliedes (17) verbundenen Anschlag (57) durchlaufendes Kabel (51) sowie Vorrichtungen zum Anziehen des Kabels umfassen.

7. Vorrichtung nach Anspruch 6, dadurch gekennzeichnet, daß sie darüberhinaus einen einerseits am Kabel (51), andererseits an der unteren Spange des Rahmens (9) der elastischen Matte (7) befestigten Haken (59) aufweist.

8. Vorrichtung nach einem der Ansprüche 6 und 7, dadurch gekennzeichnet, daß der Anschlaß (57) über einen Bügel (55) mit dem unteren Arm (29) verbunden ist.

9. Vorrichtung nach einem der Ansprüche 6 bis 8, dadurch gekennzeichnet, daß die Vorrichtungen zum Anziehen des Kabels am Rahmen der Sitzfläche des Sitzes befestigt sind.

10. Vorrichtung nach einem der Ansprüche 6 bis 9, dadurch gekennzeichnet, daß die Vorrichtungen zum Anziehen des Kabels aus einer Winde bestehen.
